# EUROPÄISCHE PATENTANMELDUNG

(11) **EP 1 224 850 A1**
(43) Veröffentlichungstag der Anmeldung: **24.07.2002**
(21) Anmeldenummer: 02000645.8
(22) Anmeldetag: 11.01.2002
(51) Int. Cl.: A01B 33/14

(54) **Spargeldammfräsen-Schlegelrotor**

(30) Priorität: 23.01.2001 DE 20101186 U
(71) Anmelder: Konstantinidis, K. & Co.KG, 57022 Thessaloniki (GR)
(72) Erfinder: Konstantinidis, K. & Co.KG, 57022 Thessaloniki (GR)
(74) Vertreter: Neubauer, Hans-Jürgen, Dipl.-Phys.

(57) **Zusammenfassung**

Die Erfindung betrifft einen Spargeldammfräsen-Schlegelrotor (1; 20) mit wenigstens einer drehantreibbaren Trägerscheibe (2, 3; 21, 22) auf einem zentralen Wellenabschnitt (4; 23) sowie mit einer Mehrzahl an der Trägerscheibe (2, 3; 21, 22) am Umfang versetzt und vom Umfang mit freien äußeren Schlegelenden abstehender, lösbar angeordneter Schlegel (9; 30). Weiter ist je eine Befestigungsvorrichtung für jeden Schlegel (9; 30) zur Befestigung der Schlegel (9; 30) an der Trägerscheibe (2, 3; 21, 22) vorgesehen. Erfindungsgemäß ist jeweils eine Befestigungsvorrichtung als formschlüssige, fixierbare Einsteckverbindung für einen zugeordneten Schlegel (9; 30) ausgeführt, wobei ein kanalförmiges Steckgehäuse (7; 29) mit einem Querschnitt entsprechend dem Querschnitt des zugeordneten Schlegels (9; 30) auf der Trägerscheibe (2, 3; 21, 22) ausgebildet ist. Ferner ist jedem Steckgehäuse (7; 29) eine Fixiereinrichtung für einen eingesteckten Schlegel (9; 30) zu dessen Halterung im Steckgehäuse (7; 29) zugeordnet.

## Beschreibung

Die Erfindung betrifft einen Spargeldammfräsen-Schlegelrotor nach dem Oberbegriff des Anspruchs 1.

Spargeldammfräsen dienen zum Anlegen und zur Pflege von Dämmen auf Spargelfeldern. Spargeldammfräsen weisen ein Fahrwerk auf mit einem Fahrantrieb auf, mit dem die Spargeldammfräse beim Anlegen eines Dammes mit einer Geschwindigkeit von etwa zwei bis drei Stundenkilometern und bei der Pflege eines Dammes mit etwa fünf Stundenkilometern entlang eines Dammes fortbewegbar ist.

Wesentliche Bestandteile einer Spargeldammfräse sind wenigstens zwei Schlegelrotoren, die in einem Querabstand im Bodenbereich angeordnet sind und über längsachsparallele Wellen gegenläufig antreibbar sind. Der Wellenabstand bestimmt die Dammbreite und beträgt ca. 1500 mm. Der Antrieb erfolgt über starke Zahnräder aus hochwertigem, gehärteten Stahl.

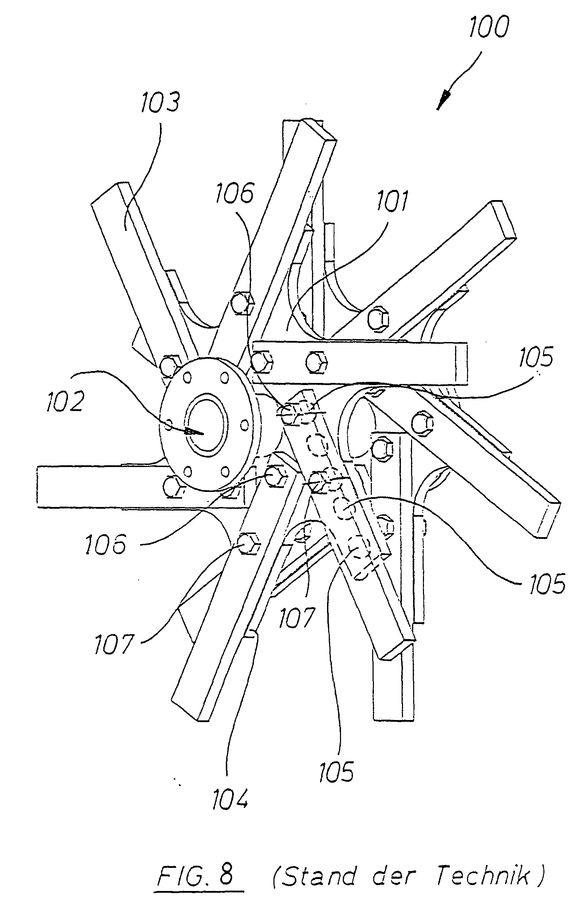

Ein bekannter gattungsgemäßer Dammfräsen-Schlegelrotor 100 ist in Fig. 8 gezeigt und besteht aus wenigstens einer drehantreibbaren Trägerscheibe 101 auf einem zentralen Wellenabschnitt 102 an der eine Mehrzahl am Umfang versetzte und vom Umfang mit freien äußeren Schlegelenden abstehende Schlegel 103 lösbar angeordnet sind. Für jeden Schlegel 103 ist eine Befestigungsvorrichtung zu seiner Befestigung an der Trägerscheibe 101 vorgesehen.

Bei den bekannten Schlegelrotoren 100 sind zwei oder ggf. drei axial versetzte, gleich aufgebaute Trägerscheiben 101 auf dem zentralen Wellenabschnitt 102 angeordnet und in Achsrichtung gesehen weisen hintereinander auf unterschiedlichen Trägerscheiben 101 angeordnete Schlegel 103 einen Winkelversatz auf. Die Schlegel 103 sind nicht genau radial auf das Scheibenzentrum hin ausgerichtet, sondern jeweils parallel in einem gleichen Abstand zu einer solchen Radialrichtung versetzt, so dass die Schlegel 103 gegenüber einer Radialrichtung schräg von der Trägerscheibe 101 abstehen und in einer jeweiligen Drehrichtung schräg nachlaufen. Bei bekannten Ausführungsformen von Schlegelrotoren 100 sind die Trägerscheiben 101 als Sternscheiben mit sechs Sternzacken 104 ausgeführt, an denen je ein Schlegel 103 an einem Sternzacken 104 diesen überragend befestigt ist.

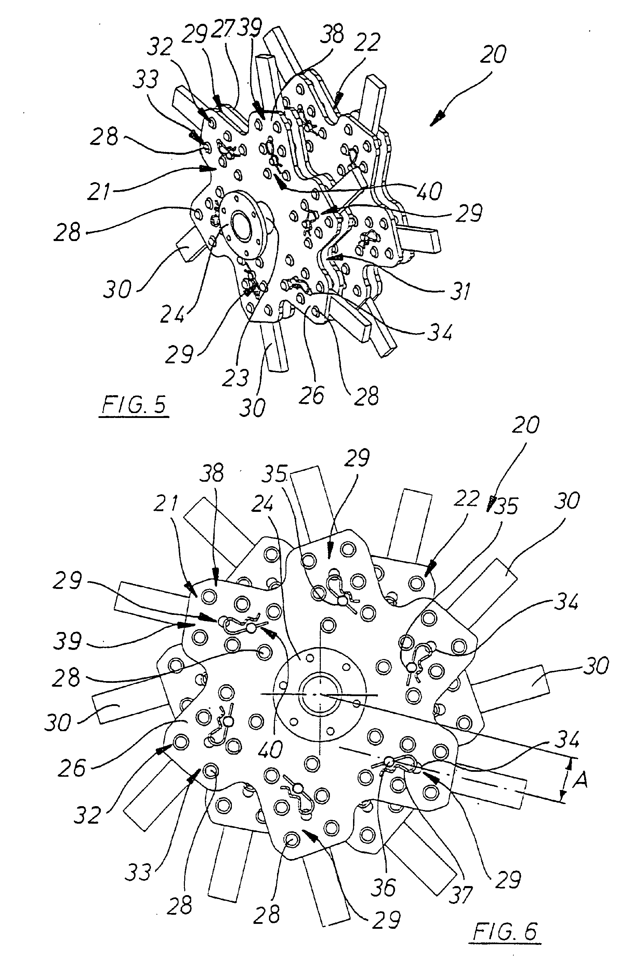

Bei diesen bekannten Schlegelrotoren 100 sind die Schlegel 103 durch lösbare Schraubverbindungen befestigt. Dazu sind in einem radialinneren Bereich eines Schlegels 103 zwei beabstandete Schlegel-Haltebohrungen angebracht. An der zugeordneten Trägerscheibe sind in entsprechenden Abständen fünf Trägerscheiben-Haltebohrungen 105 angebracht, was in der Darstellung der Fig. 5 lediglich äußerst schematisch und strichliert für einen Trägerscheibenbereich dargestellt ist. Die Schlegel 103 werden dann mittels jeweils zwei Schraubenbolzen 106, 107 und Schraubenmuttern bei fluchtenden Haltebohrungen befestigt. Durch die fünf linear versetzten Trägerscheiben-Haltebohrungen 105 sind durch die Wahl unterschiedlicher Haltebohrungskombinationen Längseinstellungen der Schlegel 103 in drei unterschiedlichen Positionen möglich, da die Schlegel-Haltebohrungen für eine breite Abstützbasis doppelt soweit auseinanderliegen, als die Trägerscheiben-Haltebohrungen 105.

Diese bekannte Befestigung der Schlegel 103 an der Trägerscheibe 101 hat unter anderem den Nachteil, dass die betriebsmäßig hohen Drehmomente auf die Schlegel 103, insbesondere bei der Bearbeitung von harten und steinigen Böden, im wesentlichen über den jeweils radialäußeren Schraubenbolzen 107 abgestützt werden, so dass dort auch die höchstbelasteten Stellen der Schlegel 103 liegen. Bei der vorliegenden Befestigungsart sind aber gerade hier der Schlegel 103 durch die äußeren Schlegelhaltebohrungen geschwächt, so dass die Gefahr von Schlegelbrüchen gegeben ist oder zur weitgehenden Vermeidung einer Bruchgefahr die Schlegel 103 insgesamt in an sich nicht erforderlicher Stärke zum Ausgleich der Materialschwächung an der Schlegelhaltebohrung auszuführen sind.

Ein weiterer Nachteil der bekannten Befestigungsart besteht darin, dass eine Montage oder eine Längsverstellung der Schlegel 103 zeitaufwendig mit Werkzeug durchzuführen ist. Schlegelverstellungen werden insbesondere bei einer Abnutzung erforderlich wobei die Schlegel 103 dann jeweils weiter nach außen nachzusetzen sind. Bei der bekannten Schlegelrotorausführung mit zwei Trägerscheiben 101 und jeweils sechs Schlegeln 103 pro Trägerscheibe 101, welche über je zwei Schraubverbindungen befestigt sind, müssen bei Berücksichtigung von zwei Schlegelrotoren 100 an einer Spargeldammfräse insgesamt 48 Schraubverbindungen bei einer Schlegelverstellung gelöst und wieder hergestellt werden. Dies stellt ersichtlich einen erheblichen Arbeitsaufwand dar. In dieser Zeit ist zudem die Spargeldammfräse nicht einsatzfähig.

Es können nicht beliebig viele Trägerscheiben-Haltebohrungen 105 pro Schlegel 103 an der Trägerscheibe 101 angebracht werden, so dass bei dem bekannten Schlegelrotor 100 nur eine dreimalige Schlegelverstellung nach außen möglich ist. Bei einer weiteren Schlegelabnutzung sind die Schlegel 103 insgesamt auszutauschen. Da die Schlegel 103 aus besonders hochwertigem abnutzungsfesten, gehärteten und elastischen Spezialstahl bestehen ist ein kompletter Austausch der Schlegel 103 kostenintensiv.

Aufgabe der Erfindung ist es demgegenüber einen bekannten gattungsgemäßen Dammfräsen-Schlegelrotor so weiterzubilden, dass ein Schlegel bei gleichem Querschnitt einer höheren Belastung standhält und die Montage sowie eine Verstellung der Schlegel einfacher und schneller durchführbar ist. Zudem soll die Möglichkeit eröffnet werden die Schlegellänge bei Abnutzung besser ausnützen zu können.

Diese Aufgabe wird mit den Merkmalen des Anspruchs 1 gelöst.

Gemäß Anspruch 1 ist jeweils eine Befestigungsvorrichtung für einen Schlegel als formschlüssige, fixierbare Einsteckverbindung ausgeführt. Dabei ist ein kanalförmiges Steckgehäuse mit einem Querschnitt entsprechend dem Querschnitt des zugeordneten Schlegels auf der Trägerscheibe ausgebildet. Jedem Steckgehäuse ist eine Fixiereinrichtung für einen eingesteckten Schlegel zu dessen Halterung im Steckgehäuse zugeordnet.

Vorteilhaft werden bei einer solchen Befestigung eines Schlegels die betriebsmäßig auftretenden Drehmomente im Steckgehäuse abgestützt, wobei die höchsten Belastungen am äußeren Gehäuseende auftreten. Gegenüber der bekannten Befestigungsart ist hier an der Stelle des äußeren Gehäuseendes ein Schlegel jedoch nicht mehr durch eine Bohrung geschwächt. Zudem ist die freie Hebellänge eines Schlegels bis zur Abstützstelle an der Trägerscheibe gegenüber der bekannten Befestigungsart reduziert. Insgesamt ergibt sich daraus bei gleichem Schlegeldurchmesser wie im Stand der Technik eine wesentlich erhöhte Belastbarkeit und Bruchfestigkeit eines Schlegels.

Da die Krafteinleitung der Drehmomente in die Trägerscheibe über das Einsteckgehäuse erfolgt muss eine Fixiereinrichtung nur eine Verschiebung eines Schlegels im Steckgehäuse verhindern. Die Krafteinwirkung auf eine solche Fixiereinrichtung ist somit geringer als auf die Schraubbefestigungen nach dem Stand der Technik, so dass eine Fixiereinrichtung einfacher aufgebaut und ggf. schwächer dimensioniert werden kann. Grundsätzlich können eine Mehrzahl an sich bekannter Fixiereinrichtungen zur Fixierung der Relativlage eines Schlegels im Steckgehäuse verwendet werden. Insbesondere sind dazu grundsätzlich einfach lösbare Reibschluss-, Formschluss- und Rastverbindungen einsetzbar. Damit wird eine Schlegelmontage oder Schlegelverstellung einfach und schnell ausführbar, was Kosten für die Arbeitszeit reduziert und die Einsatzdauer der Spargeldammfräse erhöht.

Eine besonders bevorzugte Fixiereinrichtung wird mit Anspruch 2 angegeben. Dabei umfasst diese wenigstens eine Steckgehäuse-Haltebohrung welche antriebsachsparallel das Steckgehäuse durchdringt. In dem jeweils zugeordneten Schlegel ist wenigstens eine Schlegelhaltebohrung angebracht. Dieser Schlegel ist dann mittels eines durch die Steckgehäuse-Haltebohrung und die fluchtende Schlegelhaltebohrung durchsteckbaren und mittels eines Splints sicherbaren Haltebolzens fixierbar. Eine solche durch einen Splint gesicherte Steckbolzen-Halterung kann schnell und einfach ohne ein besonderes Werkzeug hergestellt und auch gelöst werden. Da die Drehmomentabstützung des Schlegels in Verschieberichtung im Steckgehäuse erfolgt ist im Gegensatz zum Stand der Technik hier pro Schlegel nur ein einziger Haltebolzen für die Fixierung erforderlich. Längskräfte auf den Schlegel im Steckgehäuse werden vom zugeordneten Haltebolzen stabil und sicher abgestützt.

Weiter wird ein beidseitig offenes Steckgehäuse als Einsteck- und Durchsteckverbindung vorgeschlagen, das einfach herstellbar ist und wegen der Durchsteckmöglichkeit eine weite Schlegellängsverstellung zulässt. Das Steckgehäuse soll dabei mit einem äußeren Gehäuseende an einem äußeren Umfangsbereich der Trägerscheibe beginnen, wodurch die frei abstehende Schlegellänge als freies Hebelende vorteilhaft kurz ist. Das Steckgehäuse kann insbesondere aus Platzgründen mit einem inneren Gehäuseende in einem Abstand zum zentralen Wellenabschnitt enden, wobei jedoch die Gehäuselänge für eine ausreichende Basis der Drehmomentabstützung genügend lang zu dimensionieren ist.

In einer besonders vorteilhaften Weiterbildung nach Anspruch 3 sind mehrere in Gehäuseachsrichtung versetzte Steckgehäuse-Haltebohrungen und entsprechend mehrere im Einsteckbereich des zugeordneten Schlegels versetzt angebrachte Schlegelhaltebohrungen vorgesehen. Vorzugsweise werden zwei Steckgehäuse-Haltebohrungen und zwei Schlegelhaltebohrungen angebracht, wodurch sich bei entsprechenden Kombinationen eine vierfache veränderbare Längeneinstellung eines Schlegels ergibt. Dadurch können die Schlegellängen bis zum erforderlichen Schlegelaustausch bei einer Abnutzung besser ausgenützt werden als bei der maximalen Dreifachverstellung nach dem Stand der Technik.

Nach Anspruch 4 wird in einer einfachen und kostengünstigen Konstruktion das Steckgehäuse jeweils aus einem Abschnitt eines U-Profils hergestellt, das mit seinen freien U-Schenkelendkanten durch Schweißnähte mit der Trägerscheibe verbunden ist. Ein so hergestelltes Steckgehäuse ist für die Abstützung der großen Schlegeldrehmomente gut geeignet.

Die Schlegel können vorteilhaft in an sich bekannter Weise mit jeweils gleichen Querschnittmaßen als Flachstahlstäbe aus gehärtetem Stahl hergestellt werden.

Gemäß einem besonders vorteilhaften Aufbau nach Anspruch 5 ist vorgesehen, dass die Trägerscheibe doppelwandig mit zwei miteinander verbindbaren, voneinander beabstandeten und im wesentlichen parallelen Trägerscheibenwänden ausgebildet ist. Bei einem derartigen doppelwandigem Aufbau ist das kanalförmige Steckgehäuse im Zwischenraum zwischen den Trägerscheibenwänden ausgebildet, wobei die Trägerscheibenwände über an sich bekannte Maßnahmen, wie z.B. Distanzscheiben und/oder Abstandshalter oder dergleichen, so voneinander beabstandet sind, dass die Schlegel darin formschlüssig aufgenommen werden können. Mit einem derartigen doppelwandigen Aufbau der Trägerscheibe können die auftretenden Drehmomente noch besser abgestützt werden, da im Zwischenraum zwischen den Trägerscheibenwänden eine stabile Aufnahme für die Schlegel in Form des kanalförmigen Steckgehäuses ausgebildet werden kann.

Besonders bevorzugt ist hierbei nach Anspruch 6 vorgesehen, dass die Trägerscheibenwände zur Ausbildung der doppelwandigen Trägerscheibe miteinander über eine Mehrzahl bolzenartiger Verbindungsmittel verbunden sind, die so angeordnet sind, dass wenigstens ein Teil der bolzenartigen Verbindungsmittel gleichzeitig Bestandteil der Steckgehäuse sind und eine seitliche Begrenzung für die Schlegel in Radialrichtung der Trägerscheibe ausbilden. Diese bolzenartigen Verbindungsmittel sind beispielsweise Schrauben oder vorzugsweise Nieten. Mit derartig verbundenen Trägerscheibenwänden ergibt sich eine besonders stabile und sichere Verbindung der beiden Trägerscheibenwände zur Ausbildung der doppelwandigen Trägerscheibe. Mit dem in einer Doppelfunktion gleichzeitig auch Bestandteil des Steckgehäuses bildenden bolzenartigen Verbindungsmittel ist gleichzeitig auch eine sehr gute Abstützung großer betriebsmäßig auftretender Drehmomente möglich. Insgesamt kann daher mit einem derartigen doppelwandigen Aufbau in Verbindung mit z.B. Nieten als Verbindungsmittel zwischen den Trägerscheibenwänden und als Steckgehäusebestandteil ein Steckgehäuse ausgebildet werden, dass sehr widerstandsfähig gegen Beschädigung, wie z.B. Ausreißen, durch die hohen auftretenden betriebsmäßigen Belastungen ist und das eine sehr stabile und sichere Aufnahme für die Schlegel bildet.

Gemäß einer konkreten Ausgestaltung nach Anspruch 7 können zur Ausbildung eines Steckgehäuses in Gehäuseachsrichtung zwei parallel verlaufende und voneinander beabstandete Reihen von bolzenförmigen Verbindungsmitteln vorgesehen sein, wobei die einzelnen bolzenförmigen Verbindungsmittel jeder Reihe in Gehäuseachsrichtung voneinander beabstandet sind. Diese bolzenförmigen Verbindungsmittel jeder Reihe weisen in Gehäuseachsrichtung gesehen vorzugsweise einen jeweils gleichen Abstand auf. Ein besonders bevorzugter Aufbau weist jeweils drei voneinander in Gehäuseachsrichtung beabstandete Nieten als bolzenförmige Verbindungsmitteln pro Reihe auf.

Nach Anspruch 8 ist es auch hier in an sich bekannter Weise zweckmäßig die Schlegel nicht exakt radial auszurichten sondern diese durch eine parallele Versetzung zu einer Radialrichtung mit einer Schrägstellung nachlaufend auszuführen.

Zweckmäßig wird auch hier nach Anspruch 9 der Abstand zwischen benachbarten Schlegeln an der Trägerscheibe ausgespart, so dass sich eine Sternscheibe ergibt, auf deren Sternzacken die Steckgehäuse angeordnet sind.

Gute Dammbearbeitungsergebnisse werden z.B. mit sechs Schlegeln erreicht die in gleichmäßigen Abständen versetzt an der Trägerscheibe angeordnet sind, wobei gemäß Anspruch 10 an einem Schlegelrotor zwei gleiche axial versetzte Trägerscheiben angebracht sind und hintereinanderliegende Schlegel einen Winkelversatz aufweisen.

Für eine einfache Montage, eine geeignete Übertragung der Antriebsdrehzahl und für einen ggf. einfachen Austausch des gesamten Schlegelrotors kann der Wellenabschnitt beidseitig Anschlussflansche aufweisen.

Anhand einer Zeichnung wird die Erfindung näher erläutert.
- Fig. 1: eine schematische, perspektivische Vorderansicht eines Spargeldammfräsen-Schlegelrotors,
- Fig. 2: eine perspektivische Rückansicht des Spargeldammfräsen-Schlegelrotors nach Fig. 1,
- Fig. 3: eine schematische Vorderansicht des Spargeldammfräsen-Schlegelrotors nach Fig. 1,
- Fig. 4: eine schematische Draufsicht auf einen Spargeldammfräsen-Schlegelrotor,
- Fig. 5: eine schematische, perspektivische Ansicht einer alternativen Ausführungsform eines Spargeldammfräsen-Schlegelrotors,
- Fig. 6: eine schematische Vorderansicht des Spargeldammfräsen-Schlegelrotors nach Fig. 5,
- Fig. 7: eine schematische Draufsicht auf einen Spargeldammfräsen-Schlegelrotor, und
- Fig. 8: eine schematische, perspektivische Vorderansicht eines Spargeldammfräsen-Schlegelrotors gemäß dem Stand der Technik.

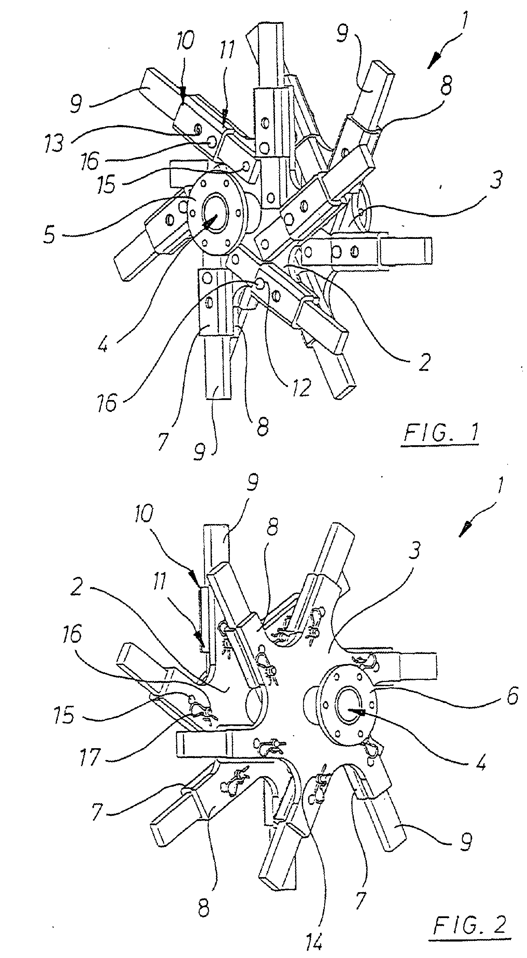

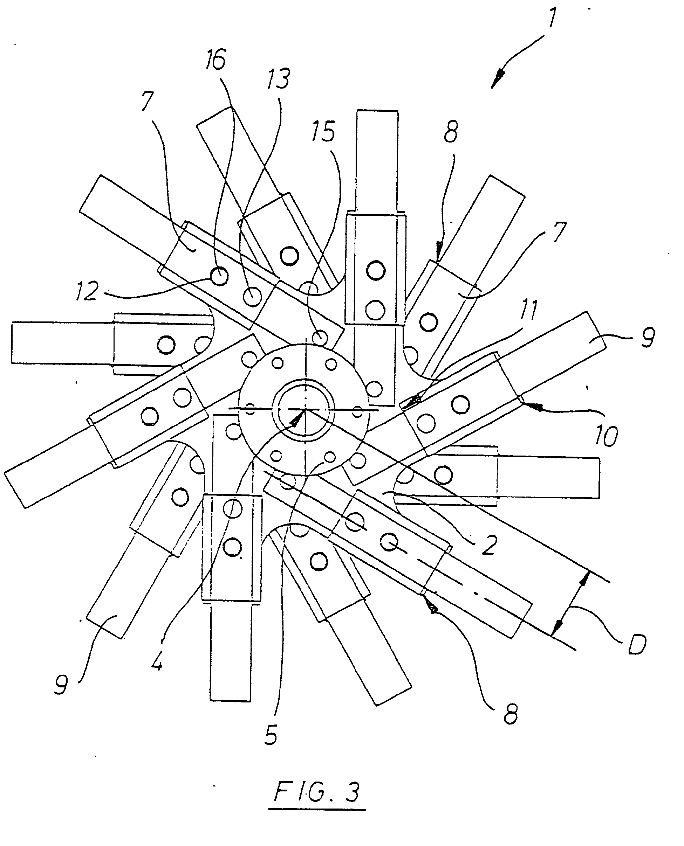

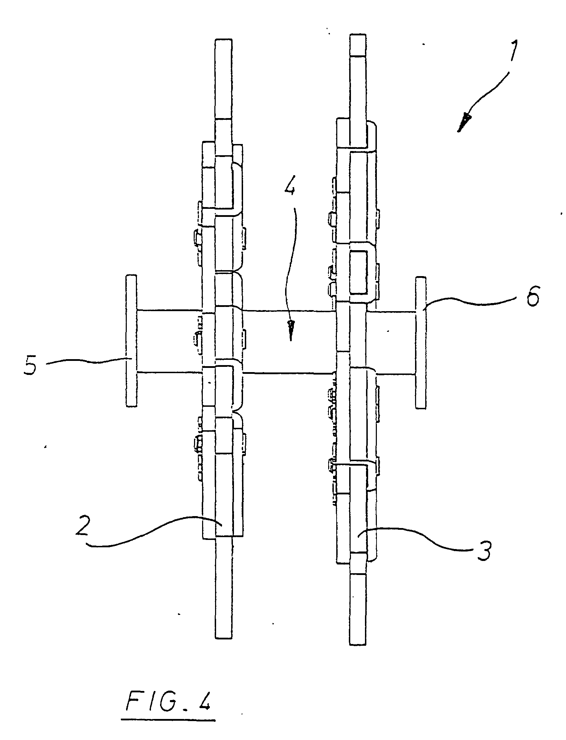

In der Fig. 1 ist schematisch und perspektivisch eine Vorderansicht eines Spargeldammfräsen-Schlegelrotors 1 gezeigt. In der Fig. 2 ist eine perspektivische Rückansicht und in der Fig. 3 eine weitere Vorderansicht des Spargeldammfräsen-Schlegelrotors 1 gezeigt. Der Schlegelrotor 1 umfasst zwei drehantreibbare, axial versetzte sowie gleich aufgebaute Trägerscheiben 2, 3 die auf einem zentralen Wellenabschnitt 4 angeordnet sind, wie dies insbesondere aus der Fig. 4 ersichtlich ist, die eine schematische Draufsicht auf den Schlegelrotor 1 zeigt. Der Wellenabschnitt 4 weist ferner beidseitig jeweils einen Anschlussflansch 5, 6 auf.

Wie dies insbesondere aus den Figuren 1 bis 3 ersichtlich ist, sind die Trägerscheiben 2, 3 jeweils als Sternscheibe ausgebildet, wobei an den Sternzacken 8 jeweils ein Steckgehäuse 7 angeordnet ist.

Das Steckgehäuse 7 ist beidseitig offen ausgebildet und als Einsteck- und Durchsteckverbindung für einen zugeordneten Schlegel 9 ausgebildet, wobei in dem hier gezeigten konkreten Ausführungsbeispiel jeweils sechs Schlegel 9 in gleichmäßigen Winkelabständen versetzt an den Trägerscheiben 2, 3 angeordnet sind. Die Schlegel 9 der Trägerscheibe 2 weisen gegenüber dem Schlegel 9 der Trägerscheibe 3 einen Winkelversatz auf, wie dies aus den Figuren 1, 2 und insbesondere aus der Fig. 3 ersichtlich ist.

Die Steckgehäuse 7 beginnen jeweils mit einem äußeren Gehäuseende 10 an einem äußeren Umfangsbereich der Sternzacken 8 der Trägerscheiben 2, 3 und enden mit einem inneren Gehäuseende 11 in einem Abstand zum zentralen Wellenabschnitt 4.

Das Steckgehäuse 7 ist jeweils aus einem Abschnitt eines U-Profils hergestellt, das mit seinen freien U-Schenkelendkanten über Schweißnähte, die hier nicht dargestellt sind, mit der Trägerscheibe 2, 3 verbunden ist.

Für eine formschlüssige Einsteckverbindung ist der Querschnitt der Schlegel 9 jeweils dem Querschnitt des entsprechend zugeordneten Steckgehäuses 7 ausgebildet, wobei in der hier gezeigten konkreten Ausführungsform die Schlegel 9 mit jeweils gleichen Querschnittmaßen als Flachstahl-Stäbe aus gehärtetem Stahl hergestellt sind.

Zur Fixierung der Schlegel 9 im Steckgehäuse 7 ist eine Fixiereinrichtung vorgesehen, die in der in den Figuren 1 bis 3 dargestellten Ausführungsform jeweils zwei Steckgehäuse-Haltebohrungen 12, 13 umfasst, die antriebsachsparallel das Steckgehäuse 7 durchdringen. In dem jeweils zugeordneten Schlegel 9 sind in der in den Figuren 1 bis 3 dargestellten Ausführungsform ebenfalls zwei Schlegel-Haltebohrungen 14, 15 angebracht, wobei die Steckgehäuse-Haltebohrungen 12, 13 ebenso wie die Schlegel-Haltebohrungen jeweils in Gehäuseachsrichtung versetzt zueinander angebracht sind. Das Vorsehen von zwei Steckgehäuse-Haltebohrungen 12, 13 und von zwei Schlegel-Haltebohrungen 14, 15 ermöglicht eine vierfache Längeneinstellung eines Schlegels 9. Jeweils eine der Steckgehäuse-Haltebohrungen 12, 13 kann mit einer der Schlegel-Haltebohrungen 14, 15 in eine Flucht gebracht werden, damit durch die hier beispielhaft gewählten fluchtenden Haltebohrungen 12, 14 ein Haltebolzen 16 durchgesteckt werden kann, der mittels eines Splints 17 gesichert werden kann (Fig. 2). Dadurch ist der jeweilige Schlegel 9 im Steckgehäuse 7 gehalten und an der Trägerscheibe 2, 3 festgelegt.

Wie dies weiter aus der Fig. 3 ersichtlich ist, sind die Schlegel 9 nicht exakt radial ausgerichtet, sondern liegt die Gehäuseachsrichtung jeweils gegenüber einer Radialrichtung parallel um einen bestimmten Abstand (D) in der Drehrichtung versetzt.

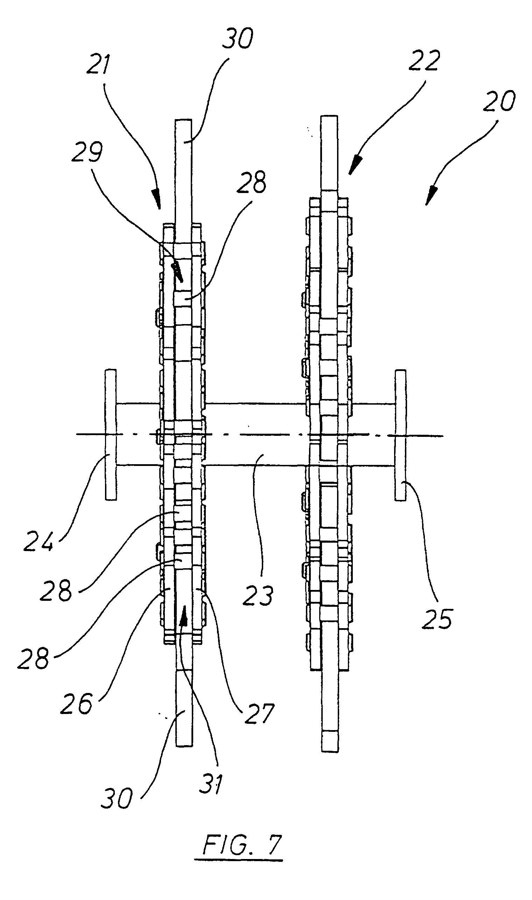

In der Fig. 5 ist schematisch und perspektivisch eine alternative Ausführungsform eines Spargeldammfräsen-Schlegelrotors 20 gezeigt. In der Fig. 6 ist eine Vorderansicht des Spargeldammfräsen-Schlegelrotors 20 gezeigt, während in der Fig. 7 eine entsprechende Draufsicht auf die Spargeldammfräsen-Schlegelrotoranordnung gemäß den Fig. 5 und 6 dargestellt ist.

Wie den Fig. 5 bis 7 entnommen werden kann, umfasst der Schlegelrotor 20 auch hier wiederum zwei drehantreibbare, axial versetzte sowie gleich aufgebaute Trägerscheiben 21, 22, die auf einem zentralen Wellenabschnitt 23 angeordnet sind. Auch dieser Wellenabschnitt 23 weist beidseitig jeweils einen Anschlussflansch 24, 25 auf.

Die Trägerscheiben 21, 22 sind hier jeweils doppelwandig aus zwei miteinander verbindbaren, voneinander beabstandeten und im wesentlichen parallelen Trägerscheibenwänden 26, 27 ausgebildet. Der Aufbau dieser Trägerscheiben 21, 22 wird nachfolgend beispielhaft für die Trägerscheibe 21 näher erläutert.

Wie dies den Fig. 5 bis 7 entnommen werden kann, sind die Trägerscheibenwände 26, 27 zur Ausbildung der doppelwandigen Trägerscheibe 21 miteinander über eine Mehrzahl von Nieten verbunden, die so angeordnet sind, dass diese zusammen mit den entsprechenden Wandbereichen der Trägerscheibenwände 26, 27 die kanalförmigen Steckgehäuse 29 für eine formschlüssige Aufnahme der Schlegel 30 im Zwischenraum 31 zwischen den Trägerscheibenwänden 26, 27 ausbilden. Die Beabstandung der Trägerscheibenwände 26, 27 ist hier so gewählt, z.B. über entsprechende Distanzscheiben auf dem Wellenabschnitt 23 zwischen den beiden Trägerscheibenwänden 26, 27, dass diese Trägerscheibenwände 26, 27 einen Abstand für eine formschlüssige Schlegelaufnahme zwischen den beiden Trägerscheibenwänden 26, 27 ausbilden.

Die Nieten 28 sind so angeordnet, dass in Gehäuseachsrichtung pro Steckgehäuse 29 zwei parallel verlaufende und voneinander beabstandete Reihen 32, 33 von Nieten ausgebildet sind, wobei in jeder Reihe 32, 33 die Nieten 28 in Gehäuseachsrichtung jeweils einen gleichen Abstand voneinander aufweisen. In den dargestellten Zeichnungen der Fig. 5 bis 7 sind hier insgesamt jeweils drei Nieten 28 pro Reihe 32, 33, d.h. insgesamt sechs Nieten 28 als radiale seitliche Begrenzung der Schlegel 30 und damit als Bestandteil des Steckgehäuses 29 vorgesehen.

Die Verbindung der beiden Trägerscheibenwände 26, 27 mittels der Nieten 28 ist insbesondere aus der Fig. 7 gut ersichtlich.

Wie dies den Fig. 5 bis 7 weiter entnommen werden kann, ist auch hier im Steckgehäuse 29 jeweils eine Fixiereinrichtung vorgesehen, die jeweils an den Trägerscheibenwänden 26, 27 ausgebildete Steckgehäuse-Haltebohrungen 34, 35 aufweist. Jede Steckgehäuse-Haltebohrung 34 oder 35 ist hier durch eine in jeder der Trägerscheibenwände 26, 27 ausgebildete, fluchtende Bohrung gebildet, was jedoch nicht im Detail dargestellt ist. Diese Steckgehäuse-Haltebohrungen 34, 35 durchdringen das Steckgehäuse 29 antriebsachsparallel. In dem dem jeweiligen Steckgehäuse 29 zugeordneten Schlegel 30 sind ebenfalls wieder, wie in dem zuvor näher erläuterten Ausführungsbeispiel der Fig. 1 bis 4, z.B. zwei Schlegel-Haltebohrungen angebracht, die hier jedoch aus Übersichtlichkeitsgründen nicht dargestellt sind. Die Steckgehäuse-Haltebohrungen 34, 35 in den beiden Trägerscheibenwänden 26, 27 sind ebenso wie die Schlegel-Haltebohrungen jeweils in Gehäuseachsrichtung versetzt zueinander angebracht. Das Vorsehen von hier beispielhaft zwei Steckgehäuse-Haltebohrungen 34, 35 und von zwei Schlegel-Haltebohrungen ermöglicht eine 4-fache Längeneinstellung eines Schlegels 30. Auch hier kann wieder jeweils eine der Steckgehäuse-Haltebohrungen 34, 35 mit einer der Schlegel-Haltebohrungen in eine Flucht gebracht werden, damit durch die hier beispielhaft gewählten fluchtenden Haltebohrungen des Schlegels 30 und der Trägerscheibenwände 26, 27 ein Haltebolzen 36 durchgesteckt werden kann. Dieser Haltebolzen 36 kann mittels eines Splints 37 gesichert werden. Der Abstand der beiden Reihen 32, 33 der Nieten 28 eines jeden Steckgehäuses 29 ist dabei vorzugsweise so gewählt, dass der jeweilige Schlegel 30 im Steckgehäuse 29 formschlüssig festgelegt ist.

Auch hier sind wieder die Schlegel 30 nicht exakt radial ausgerichtet, sondern liegt die Gehäuseachsrichtung jeweils gegenüber einer Radialrichtung parallel um einen bestimmten Abstand (A) in der Drehrichtung versetzt.

Wie dies den Fig. 5 bis 7 weiter zu entnehmen ist, sind auch hier die Trägerscheiben 21, 22 als Sternscheiben ausgebildet und sind die Steckgehäuse 29 an den Sternzacken 38 angeordnet.

Ferner beginnt auch hier das Steckgehäuse 29 jeweils mit einem äußeren Gehäusebereich 39 an einem äußeren Umfangsbereich der jeweiligen Trägerscheibe 21, 22 und endet mit einem inneren Gehäuseendbereich 40 in einem Abstand zum zentralen Wellenabschnitt 23.

## Patentansprüche

1. Spargeldammfräsen-Schlegelrotor (1; 20)
mit wenigstens einer drehantreibbaren Trägerscheibe (2, 3; 21, 22) auf einem zentralen Wellenabschnitt (4; 23),
mit einer Mehrzahl an der Trägerscheibe (2, 3; 21, 22) am Umfang versetzt und vom Umfang mit freien äußeren Schlegelenden abstehender, lösbar angeordneter Schlegel (9; 30), und
mit je einer Befestigungsvorrichtung für jeden Schlegel (9; 30) zur Befestigung der Schlegel (9; 30) an der Trägerscheibe (2,3; 21, 22),
**dadurch gekennzeichnet,**
**dass** jeweils eine Befestigungsvorrichtung als formschlüssige, fixierbare Einsteckverbindung für einen zugeordneten Schlegel (9; 30) ausgeführt ist, wobei
ein kanalförmiges Steckgehäuse (7; 29) mit einem Querschnitt entsprechend dem Querschnitt des zugeordneten Schlegels (9; 30) auf der Trägerscheibe (2, 3; 21, 22) ausgebildet ist, und
jedem Steckgehäuse (7; 29) eine Fixiereinrichtung für einen eingesteckten Schlegel (9; 30) zu dessen Halterung im Steckgehäuse (7; 29) zugeordnet ist.

2. Spargeldammfräsen-Schlegelrotor nach Anspruch 1, **dadurch gekennzeichnet,**
**dass** das Steckgehäuse (7; 29) beidseitig offen ist und als Einsteck- und Durchsteckverbindung für einen zugeordneten Schlegel (9; 30) ausgebildet ist,
**dass** das Steckgehäuse (7; 29) mit einem äußeren Gehäuseende (10; 39) an einem äußeren Umfangsbereich der Trägerscheibe (2, 3) beginnt und mit einem inneren Gehäuseende (11; 40) in einem Abstand zum zentralen Wellenabschnitt (4; 23) endet,
**dass** die Fixiereinrichtung wenigstens eine Steckgehäuse-Haltebohrung (12, 13; 34, 35) umfasst, welche antriebsachsparallel das Steckgehäuse (7; 29) durchdringt,
**dass** in dem jeweils zugeordneten Schlegel (9; 30) wenigstens eine Schlegel-Haltebohrung (14, 15) angebracht ist, und
**dass** der jeweilige Schlegel (9; 30) mittels eines durch die Steckgehäuse-Haltebohrung (12, 13; 34, 35) und die fluchtende Schlegel-Haltebohrung (14, 15) durchsteckbaren und mittels eines Splints (17; 37) sicherbaren Haltebolzens (16; 36) fixierbar ist.

3. Spargeldammfräsen-Schlegelrotor nach Anspruch 2, **dadurch gekennzeichnet, dass** mehrere in Gehäuseachsrichtung versetzte Steckgehäuse-Haltebohrungen (12, 13; 34, 35) und mehrere, im Einsteckbereich des zugeordneten Schlegels (9; 30) versetzte Schlegel-Haltebohrungen (14, 15) angebracht sind.

4. Spargeldammfräsen-Schlegelrotor nach einem der Ansprüche 1 bis 3, **dadurch gekennzeichnet, dass** das Steckgehäuse (7) jeweils aus einem Abschnitt eines U-Profils hergestellt ist, das mit seinen freien U-Schenkelendkanten durch Schweißnähte mit der Trägerscheibe (2, 3) verbunden ist.

5. Spargeldammfräsen-Schlegelrotor nach einem der Ansprüche 1 bis 3, **dadurch gekennzeichnet,**
**dass** die Trägerscheibe (21, 22) doppelwandig aus zwei miteinander verbindbaren, voneinander beabstandeten und im wesentlichen parallelen Trägerscheibenwänden (26, 27) ausgebildet ist, und
**dass** das kanalförmige Steckgehäuse (29) für eine formschlüssige Schlegelaufnahme im Zwischenraum (31) zwischen den Trägerscheibenwänden (26, 27) ausgebildet ist.

6. Spargeldammfräsen-Schlegelrotor nach Anspruch 5, **dadurch gekennzeichnet, dass** die Trägerscheibenwände (26, 27) zur Ausbildung der doppelwandigen Trägerscheibe (21, 22) miteinander über eine Mehrzahl bolzenartiger Verbindungsmittel (28), vorzugsweise Niete, verbunden sind, die so angeordnet sind, dass wenigstens ein Teil der bolzenartigen Verbindungsmittel (28) gleichzeitig Bestandteil der Steckgehäuse (29) sind und eine seitliche Begrenzung für die Schlegel (30) in Radialrichtung der Trägerscheibe (21, 22) ausbilden.

7. Spargeldammfräsen-Schlegelrotor nach Anspruch 6, **dadurch gekennzeichnet,**
**dass** in Gehäuseachsrichtung zwei parallel verlaufende und voneinander beabstandete Reihen (32, 33) von bolzenförmigen Verbindungsmitteln (28) zur Ausbildung eines Steckgehäuses (29) vorgesehen sind, und
**dass** die einzelnen bolzenförmigen Verbindungsmittel (28) jeder Reihe (32, 33) in Gehäuseachsrichtung voneinander beabstandet sind, vorzugsweise mit einem jeweils gleichen Abstand.

8. Spargeldammfräsen-Schlegelrotor nach einem der Ansprüche 1 bis 7, **dadurch gekennzeichnet, dass** die Gehäuseachsrichtung jeweils gegenüber einer Radialrichtung parallel' um einen bestimmten Abstand (D; A) in der Drehrichtung versetzt liegt.

9. Spargeldammfräsen-Schlegelrotor nach einem der Ansprüche 1 bis 8, **dadurch gekennzeichnet, dass** die Trägerscheibe (2, 3; 21, 22) als Sternscheibe ausgebildet ist und die Steckgehäuse (7; 29) an den Sternzacken (8; 38) angeordnet sind.

10. Spargeldammfräsen-Schlegelrotor nach einem der Ansprüche 1 bis 9, **dadurch gekennzeichnet, dass** wenigstens zwei axial versetzte, gleich aufgebaute Trägerscheiben (2, 3; 21, 22) auf dem zentralen Wellenabschnitt (4; 23) angeordnet sind, wobei in Achsrichtung gesehen, hintereinanderliegende Schlegel (9; 30) einen Winkelversatz aufweisen.
